# EUROPEAN PATENT SPECIFICATION

(11) **EP 4 299 393 B1**
(45) Date of publication and mention of the grant of the patent: **25.02.2026**
(21) Application number: 23182717.1
(22) Date of filing: 30.06.2023
(51) Int. Cl.: B60T 8/17, B60T 13/58

(54) **METHOD AND SYSTEM OF CONTROLLING A VEHICLE ON A DOWNSLOPE ROUTE**
VERFAHREN UND SYSTEM ZUR STEUERUNG EINES FAHRZEUGS AUF EINER GENEIGTEN FAHRSTRECKE
PROCÉDÉ ET SYSTÈME DE COMMANDE D'UN VÉHICULE SUR UNE ROUTE EN PENTE DESCENDANTE

(30) Priority: 01.07.2022 NL 2032348
(43) Date of publication of application: 03.01.2024
(73) Proprietor: DAF Trucks N.V., 5643 TW Eindhoven (NL)
(72) Inventor: BEENAKKERS, Menno Adrianus, 5643 TW Eindhoven (NL); KESSELS, Johannes Theodorus Bernard Anna, 5643 TW Eindhoven (NL)
(74) Representative: V.O.

(56) References cited:
- WO-A1-2010/059108
- WO-A1-2015/197084
- WO-A1-2015/197092
- US-A1- 2012 089 313

## Description

### Field of invention

### Description of the prior art

When driving on a downslope route, commercial vehicles, in particular heavy trucks are provided with an engine retarder system, that e.g. uses the internal combustion engine as a compression brake, by actively controlling intake and exhaust valves and increase back pressure to the engine. Compression braking is a concept known from e.g. EP1389270. During compression braking, exhaust valves may be selectively opened to convert, at least temporarily, a power producing internal combustion engine into a power absorbing air compressor. An engine retarder system controls a lift of the exhaust valves, e.g. by a hydraulic actuator. At the beginning of the compression stroke the exhaust valves are opened and high pressurized air from the exhaust manifold flows back into the cylinder which increases the initial pressure during compression by back gas recirculation. Subsequently the exhaust valves close again to increase pressure during the second half of the compression stroke. Near the end of the compression stroke the exhaust valves are opened again dissipating the energy instead of returning it to the drivetrain as positive power during the power stroke; this process is called compression release. This sequence of events can generate high amounts of retarding power, in the order of 300 kW, e.g. 200-400 kW depending on engine speed.

One of the challenges associated with the engine retarder is its typically large response time, since, before compression brake power is fully generated, a time delay occurs of several seconds. First, boost pressure needs to be dropped below a certain level before the brake mode can be selected to prevent too high forces in valve train in brake mode; in addition, hydraulic lag of valve operation system generates a delay, since all specific oil channels have to be filled when brake mode is activated; also settings for the variable turbine geometry (VTG) - if present are adapted. In addition, a downshift of gears, is usually necessary in order to attain a suitable brake power, and then the gradual increase of brake power in conjunction with increasing back pressure of the combustion engine constitutes the engine retarder mode until full brake power is achieved. An existing problem is that a driver often fully engages the engine retarder power to a maximum position which may lead to overshoot once the engine retarder achieves its maximum braking torque. Such an overshoot effect is undesirable as it in facts wastes too much kinetic energy from the vehicle. In case the endurance brake torque is better controllable, the driver probably will use the stalk level more at intermediate positions such that no overshoot will happen. This is good for driveability as well as fuel consumption of the truck.

An alternative system is a so called 'intarder' which is a hydraulic brake incorporated in the gearbox of the driveline, also called a driveline retarder, and that has a quick response compared to the engine retarder. However, the intarder brake adds to fuel costs since it increases friction by hydraulic drag in the drive line, so creating losses when it is not engaged. Also, the intarder adds to the costs and weight of the manufacturing the vehicle, which are preferably to be reduced. By improving the transient response time of the engine retarder, drivers are brought in a position to better control the amount of braking torque since currently it is difficult for the driver to judge at which position he needs to select the engine retarder level in view of this delay effect.

Further examples of auxiliary brakes such as retarders known in the art are disclosed by WO2015/197084 A1 and WO2015/197092 A1.

The invention aims to provide a solution obviate the problems of the prior art, to increase user comfort, while at the same time optimizing energy consumption.

### Summary of the invention

In one aspect, it is aimed to provide a system of controlling a vehicle on a downslope route, the vehicle including a combustion engine provided with an engine retarder, and further comprising a brake controller programmed to:
upon activating, by a driver, the engine retarder, activating, by the brake controller, of the foundation brake in a transient period having a foundation brake profile; wherein
the foundation brake profile has a first initial phase with a peak brake power that lowers the speed of the vehicle on the downslope route, and wherein
the foundation brake profile has a second phase that with a brake power lower than the peak brake power and that gradually decreases with a time constant about equal to the increase of engine retarder performance due to buildup of back pressure, to a steady state wherein the vehicle velocity is substantially constant with zero foundation brake power.

By providing the peak brake power in the first initial phase the speed of the vehicle, in particular, a trailer truck combination on the downslope route, that is initially increased as a consequence of the limited performance of the engine brake and potential downshift, is lowered and vehicle acceleration is prevented in the second phase. Accordingly, the system and corresponding method avoids the use of an additional endurance brake device such as an intarder and the truck becomes more energy efficient due to absence of such brake devices.

### BRIEF DESCRIPTION OF THE DRAWINGS

The invention will be further elucidated in the figures:
Figure 1A shows a generic setup for a vehicle including a combustion engine provided with an engine retarder;
Figure 1B shows a brake controller associated with the vehicle of Figure 1A;
Figure 2Arelative brake power values over time (arbitrary units) of the foundation brake and the engine retarder;
Figure 2B shows a foundation brake profile on a larger time scale;
Figure 2C shows a vehicle speed curve with and without the brake foundation brake;
Figure 3A shows a flow of instructions for activating the engine retarder;
Figure 3B shows a control diagram for implementing the flow of instructions of Figure 3A;
Figure 4 shows a diagram with additional control parameters for the brake controller

### DETAILED DESCRIPTION

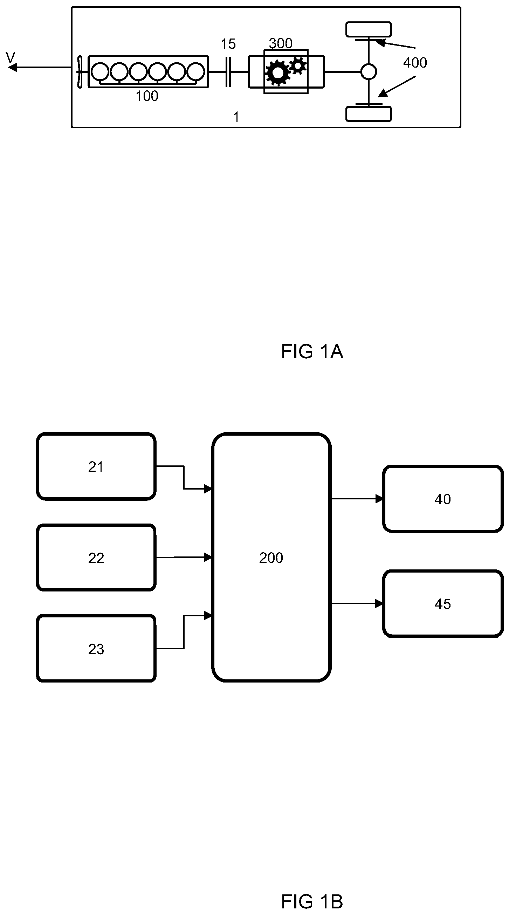

Unless otherwise defined, all terms (including technical and scientific terms) used herein have the same meaning as commonly understood by one of ordinary skill in the art to which this disclosure belongs as read in the context of the description and drawings. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some instances, detailed descriptions of well-known devices and methods may be omitted so as not to obscure the description of the present systems and methods. Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be further understood that the terms "comprises" and/or "comprising" specify the presence of stated features but do not preclude the presence or addition of one or more other features. Figure 1A shows a generic setup for a vehicle 1 including a combustion engine provided with an engine retarder 100, which is a specific function of the engine including structure that will not be described in the detailed description since it is known conventionally and has certain features, that provides a response as described in the introduction and will be further elaborated below. For ease of understanding the vehicle 1 has a velocity V and a driveline 15, that includes a clutch and a transmission 300. In a conventional setup, the transmission 300 may be equipped with an driveline retarder system, which is a hydraulic brake with a brake response that will be described below and is known to the skilled person. Furthermore, the vehicle 1 is equipped with foundation brakes 400, that brake the wheels and are typically provided through brake pads and disc brakes. The classical idea behind of endurance braking is not to use the foundation brakes and save money on service cost (so to extend the lifetime of the brake pads and disc brakes). According to this invention the foundation brakes are activated in the initial phase of braking, and a well-balanced trade-off is made between a good initial braking response versus extra wear for the service brakes.

Figure 1B in more detail shows a brake controller according to an aspect of the invention, that controls the foundation brakes as part of an endurance brake controller. To this end brake controller 200 has inputs, in particular an input 21 for activating, by a driver, the engine retarder and thereby activating, by the brake controller 200, of foundation brakes 400 in a transient period according to a foundation brake profile. Suitable inputs can be a stalk, typically known as a brake retarder stalk with a variety of functions, in particular, an on/off function and in the on- position a variable endurance brake level, e.g. a low endurance brake level (e.g. 30 % of maximum endurance brake power), a medium endurance brake level (e.g. 60% of maximum endurance brake power) and maximum endurance brake level.

The brake controller 200 calculates, dependent on the stalk position, an amount of initial brake torque from the foundation brakes. For example, if the driver selects position 1, the system aims to deliver e.g. 33% of the maximum brake torque. With position 2, e.g. 66% is delivered and with position 3 it will be 100%. These values can be calibrated according to the max. brake torque that the engine retarder 100 delivers and which can also depend on the actual vehicle speed and selected gear.

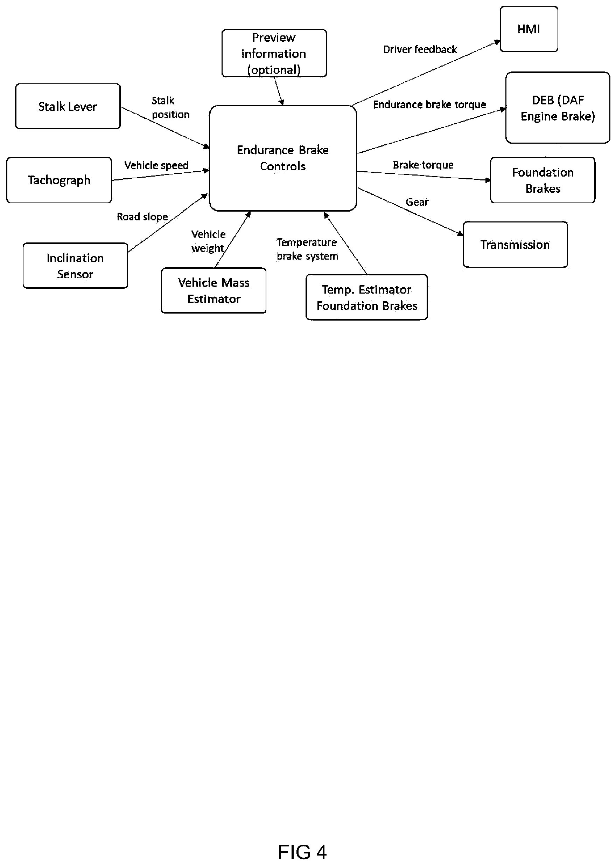

Accordingly, brake controller 200 receives a brake request and preferably accompanied with a set torque level / set deceleration level in a feed forward mode. In addition, brake controller 200 receives also speed monitoring data 22 and vehicle parameter data 23, further elaborated in Figure 4.

As a result to the driver activation brake controller 200 outputs activation control signals 45 to the engine retarder 100, as is conventional and will not be further described. In addition, according to the invention brake controller 200 outputs foundation brake activation control signals 40 to foundation brakes 400 in a transient period as will be further described according to a foundation brake profile 40.

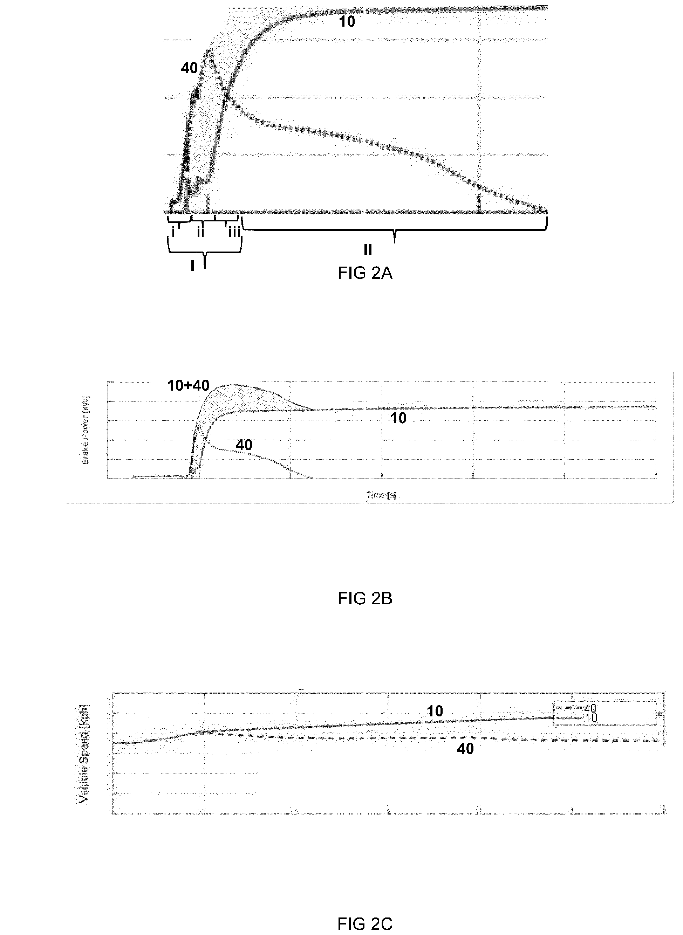

In more detail the foundation brake profile 40 is discussed in Figure 2. In Figure 2A relative brake power values over time (arbitrary units) of the foundation brake 400 as a foundation brake profile 40. Foundation brake profile 40 has that has a first initial phase I with a peak brake power that lowers the speed of the vehicle on the downslope route. The peak brake power can be typically in a range e.g. the peak brake power may exceed, for at least one selected engine retarder power mode, 350 kW, preferably 480 kW. This peak brake power is typically not dependent on vehicle mass but may be tuned in duration of the first phase that can be shortened or lengthened. The first phase is roughly determined by the activation time for activating the engine retarder 100, resulting in engine retarder power profile 10, that typically has a delay phase i. A typical time of the delay phase takes about 0.5 -2 seconds, e.g. 1 second, a startup phase (ii) wherein no backpressure is present (0.5-2 seconds), and a build up phase (iii), where the back pressure builds up (2-3 seconds). The initial phase I can characterized by the delay phase i, the startup phase ii, and the buildup phase iii, where the back pressure builds up to about 30-60 % of the requested brake power about 0.5 -2 seconds after the initial activation.

The foundation brake profile may be dependent on a selected power mode of the engine retarder.

For instance, it is possible to have a number of selected power modes, e.g. in increasing power and have the first power mode not provided with a brake profile for the foundation brakes, and subsequent power modes provided with a brake profile. A driver will then, based on experience be able to select a desired power mode for the engine retarder, with a corresponding desired brake profile, that may be stronger or less strong based on the actual driving condition. To provide for a selectable foundation brake profile will in practice be more energy efficient than a selectable power mode of the engine retarder, since it will be less likely that the driver selects a too strong engine brake power level, if in the lower phase a substantial deceleration can be provide by the foundation brake profile as described herein.

In addition, the first initial phase I may overlap with an initial build up phase iii phase of the engine retarder 100.

In the subsequent second phase II of the brake profile 40 the foundation brake power is lowered and gradually decreases with a time constant about equal to the increase of engine retarder performance due to buildup of back pressure, to a steady state wherein the vehicle velocity is substantially constant with zero foundation brake power, e.g. in a time frame of about 2-4 seconds. Typically the first phase takes about 15-25% of the time of the foundation brake event.

Extra wear of the foundation brakes might result in a modified shape/calibration of the foundation brake profile 40, wherein peak brake power is smoothened into a less steep curve. Also, the first and second phase may dependent and differ from each other for a selected engine retarder power mode. Additionally, the peak brake power may be set in accordance with a slope angle, vehicle mass, or retarder power setting or another control feature (see Fig 4).

Figure 2B shows foundation profile 40 on a larger time scale, so that it becomes apparent how the interplay is with the retarder brake profile 10 and combined brake power profile 10+40.

The initial braking torque that the engine brake can deliver is small but gradually increases over time to braking torques up to 350 kW as shown by profile 10. As an exemplary example, the foundation brake profile 40 provides almost instantaneously a maximum braking torque of 480 kW. Figure 2C shows how this reflects in vehicle speed. The dashed line represents the vehicle speed with the foundation brakes activated according to the brake profile 40 wherein initially the vehicle speed on the downslope route is lowered. Accordingly the driver does not substantially feel any speeding of the truck when the transmission opens the driveline during the gearshift, which will further improve the experienced braking force.

One can observe that the engine brake needs time to build-up its brake torque, but ultimately on a long downhill it will reach a braking torque sufficient for keeping the vehicle at constant speed. The solid speed line 10 shows a scenario where the vehicle speed increases due to insufficient brake power of the engine retarder in the beginning, (in the absence of foundation braking) and accordingly an increase in kinetic energy cannot be prevented sufficiently by the engine retarder 100.

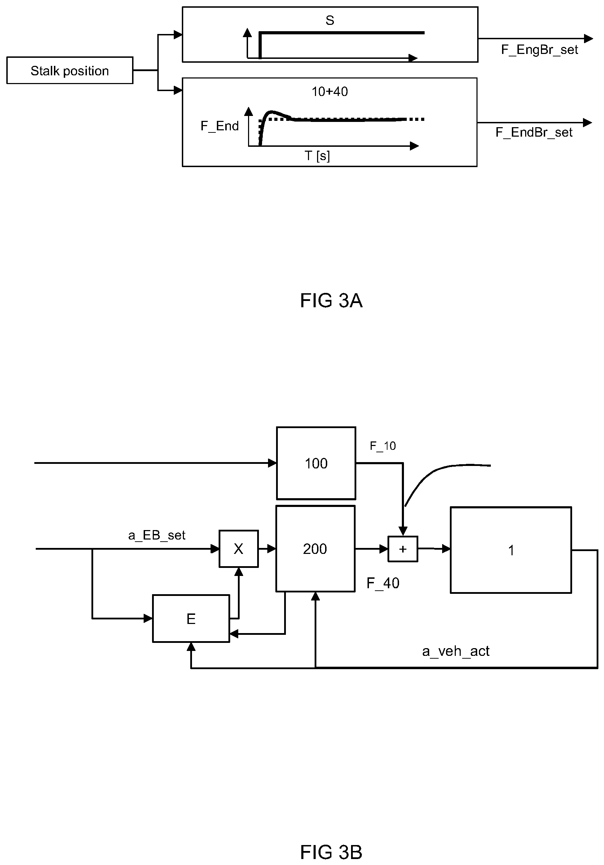

Figure 3A shows a flow of instructions for activating the engine retarder. Initially a driver input is provided, e.g. by activating the engine brake stalk lever. This results in an activation signal S for the engine brake 100 (F_EngBr_set) which can depend on a requested engine brake power level. The activation signal also provides a set level value for the overall endurance brake, which is provided to the engine brake controller of Figure 1B. The set level is provided e.g. by brake profile 40 in combination with a modelled endurance brake performance profile 10, resulting in an overall set brake level 10+40 for brake controller 200.

Figure 3B shows an exemplary control diagram for implementing the flow of instructions of Figure 3A. The set power level (a-EB -set) is inputted with a modifier X into brake controller 200. As a result, engine retarder 100 and foundation brakes 400 act in combination on vehicle 1 to produce an actual acceleration signal a_veh_act of vehicle 1. This signal is inputted in controller 200 and provided to a feedback system where an error value of the set value and actual value is minimized, resulting in an adjusted set value for the foundation brake force F_40 in order to follow the set brake profile 40. The feedback system enables the foundation brake force F_40 to be set to zero, if the measured vehicle deceleration a_veh_act appears to follow set deceleration power level without using the foundation brakes without a large error level.

Figure 4 shows a diagram with additional control parameters for the brake controller in a control architecture for the brake controller 200 with modified elements. The control strategy monitors the temperature of the brake system, to make sure that the foundation brakes will never be overheating. In case the temperature of the brake system is above a certain threshold level, the control strategy will report this to the driver (via the HMI) and not use the foundation brakes anymore, so the driver will experience the (slow) transient behaviour of the endurance brake 100 with some vehicle speed increase.

While example embodiments are shown for systems and methods, also alternative ways may be envisaged by those skilled in the art having the benefit of the present disclosure for achieving a similar function and result. E.g. some components may be combined or split up into one or more alternative components. Finally, these embodiments are intended to be merely illustrative of the present system and should not be construed as limiting the appended claims to any particular embodiment or group of embodiments. Thus, while the present system has been described in particular detail with reference to specific exemplary embodiments thereof, it should also be appreciated that numerous modifications and alternative embodiments may be devised by those having ordinary skill in the art without departing from the scope of the present systems and methods as set forth in the claims that follow. The specification and drawings are accordingly to be regarded in an illustrative manner and are not intended to limit the scope of the appended claims.

## Claims

1. A system of controlling a vehicle (1) on a downslope route, the vehicle including a combustion engine provided with an engine retarder (100), and further comprising a brake controller (200) programmed to:
- upon activating, by a driver, the engine retarder, activating, by the brake controller, of a foundation brake (400) in a transient period according to a foundation brake profile (40); wherein
∘ the foundation brake profile has a first initial phase with a peak brake power that lowers the speed of the vehicle on the downslope route, and wherein
∘ the foundation brake profile has a second phase that with a brake power lower than the peak brake power and that gradually decreases with a time constant about equal to the increase of engine retarder performance due to buildup of back pressure, to a steady state wherein the vehicle velocity is substantially constant with zero foundation brake power.

2. The system according to claim 1, wherein the foundation brake profile is dependent on a selected power mode of the engine retarder (100).

3. A system according to any preceding claim, wherein the first initial phase overlaps with an initial phase of the engine retarder (100).

4. A system according to any preceding claim, wherein the first and/or second phase are dependent on a selected engine retarder power mode.

5. A system according to any preceding claim, wherein the peak brake power exceeds, for at least one selected engine retarder power mode, 350 kW, preferably 480 kW.

6. A system according to any preceding claim, wherein the brake controller (200) registers the vehicle acceleration and controls a calculated foundation brake profile as foundation brake set point that activated to a non-zero value and that is adjusted in a feedback loop in accordance with the registered vehicle acceleration.

7. A system according to claim 6, wherein the set point is set to a zerovalue in a condition of thermal overload of the foundation brake (400).

8. A system according to any preceding claim, wherein the peak brake power is set in accordance with a slope angle, vehicle mass and retarder power setting.

9. A system according to any preceding claim, which is part of a cruise control system.

10. A vehicle including a system according to any preceding claim.

11. A method of controlling a vehicle on a downslope route, the vehicle including a combustion engine provided with an engine retarder, comprising:
- upon activating, by a driver, the engine retarder, automatically activating the foundation brake in a transient period having a foundation brake profile; wherein
∘ the foundation brake profile has a first initial phase with a peak brake power that lowers the speed of the vehicle on the downslope route, and wherein
∘ the foundation brake profile has a second phase that with a brake power lower than the peak brake power and that gradually decreases with a time constant about equal to the increase of engine retarder performance due to buildup of back pressure, to a steady state wherein the vehicle velocity is substantially constant with zero foundation brake power.

12. The method according to claim 11, wherein the foundation brake profile is dependent on a selected power mode the engine retarder.

13. A method according to any preceding claims 11-12, wherein the first initial phase overlaps with an initial phase of the engine retarder.

14. A method according to any preceding claim 11-13, wherein a calculated foundation brake profile is used as foundation brake set point that is activated to a non-zero value and that is adjusted in a feedback loop in accordance with the registered vehicle acceleration.

15. A method according to any preceding claim 11-14, wherein the peak brake power is set in accordance with a slope angle.

16. A computer program product, implemented on computer-readable non-transitory storage medium, the computer program product configured for, when run on a computer, executing the method steps according to any one of claims 11-15.

## Patentansprüche

1. System zur Steuerung eines Fahrzeugs (1) auf einer abfallenden Fahrstrecke, wobei das Fahrzeug
einen Verbrennungsmotor aufweist, der mit einem Motorretarder (100) ausgestattet ist, sowie ferner eine Bremssteuerung (200) umfasst, die dazu programmiert ist:
- bei Aktivierung des Motorretarders durch einen Fahrer eine Basisbremse (400) durch die Bremssteuerung gemäß einem Basisbremsprofil (40) in einem Übergangszeitraum zu aktivieren; wobei
∘ das Basisbremsprofil eine erste Anfangsphase mit einer Spitzenbremsleistung aufweist, die die Geschwindigkeit des Fahrzeugs auf der geneigten Fahrstrecke verringert, und wobei
∘ das Basisbremsprofil eine zweite Phase mit einer Bremsleistung aufweist, die niedriger als die Spitzenbremsleistung ist und die sich mit einer Zeitkonstante, die in etwa gleich der Erhöhung der Motorretarderleistung aufgrund des Aufbaus von Gegendruck ist, allmählich verringert, bis ein Dauerzustand erreicht ist, in dem die Fahrzeuggeschwindigkeit bei null Basisbremsleistung im Wesentlichen konstant ist.

2. System nach Anspruch 1, wobei das Basisbremsprofil von einem ausgewählten Leistungsmodus des Motorretarders (100) abhängig ist.

3. System nach einem der vorhergehenden Ansprüche, wobei sich die erste Anfangsphase mit einer Anfangsphase des Motorretarders (100) überschneidet.

4. System nach einem der vorhergehenden Ansprüche, wobei die erste und/oder zweite Phase von einem ausgewählten Motorretarderleistungsmodus abhängig sind.

5. System nach einem der vorhergehenden Ansprüche, wobei die Spitzenbremsleistung für mindestens einen ausgewählten Motorretarderleistungsmodus 350 kW, vorzugsweise 480 kW, überschreitet.

6. System nach einem der vorhergehenden Ansprüche, wobei die Bremssteuerung (200) die Fahrzeugbeschleunigung registriert und ein berechnetes Basisbremsprofil als Basisbremssollwert steuert, der bei einem von null verschiedenen Wert aktiviert und der in einer Rückkopplungsschleife entsprechend der registrierten Fahrzeugbeschleunigung eingestellt wird.

7. System nach Anspruch 6, wobei der Sollwert unter einer Bedingung thermischer Überlastung der Basisbremse (400) auf einen Nullwert eingestellt ist.

8. System nach einem der vorhergehenden Ansprüche, wobei die Spitzenbremsleistung entsprechend einer Einstellung von Neigungswinkel, Fahrzeugmasse und Retarderleistung eingestellt ist.

9. System nach einem der vorhergehenden Ansprüche, das Teil einer Geschwindigkeitsregelanlage ist.

10. Fahrzeug, umfassend ein System nach einem der vorhergehenden Ansprüche.

11. Verfahren zur Steuerung eines Fahrzeugs auf einer abfallenden Fahrstrecke, wobei das Fahrzeug einen mit einem Motorretarder ausgestatteten Verbrennungsmotor aufweist, umfassend:
- bei Aktivierung des Motorretarders durch einen Fahrer, automatisches Aktivieren der Basisbremse in einem Übergangszeitraum mit einem Basisbremsprofil; wobei
∘ das Basisbremsprofil eine erste Anfangsphase mit einer Spitzenbremsleistung aufweist, die die Geschwindigkeit des Fahrzeugs auf der geneigten Fahrstrecke verringert, und wobei
∘ das Basisbremsprofil eine zweite Phase mit einer Bremsleistung aufweist, die niedriger ist als die Spitzenbremsleistung ist und die sich mit einer Zeitkonstante, die in etwa gleich der Erhöhung der Motorretarderleistung aufgrund des Aufbaus von Gegendruck ist, allmählich verringert, bis ein Dauerzustand erreicht ist, in dem die Fahrzeuggeschwindigkeit bei null Basisbremsleistung im Wesentlichen konstant ist.

12. Verfahren nach Anspruch 11, wobei das Basisbremsprofil von einem ausgewählten Leistungsmodus des Motorretarders abhängig ist.

13. Verfahren nach einem der vorhergehenden Ansprüche 11 bis 12, wobei sich die erste Anfangsphase mit einer Anfangsphase des Motorretarders überschneidet.

14. Verfahren nach einem der Ansprüche 11-13, wobei ein berechnetes Basisbremsprofil als Basisbremssollwert verwendet wird, der bei einem von null verschiedenen Wert aktiviert und in einer Rückkopplungsschleife entsprechend der registrierten Fahrzeugbeschleunigung eingestellt wird.

15. Verfahren nach einem der vorhergehenden Ansprüche 11-14, wobei die Spitzenbremsleistung entsprechend einem Neigungswinkel eingestellt wird.

16. Computerprogrammprodukt, implementiert auf einem computerlesbaren, nicht flüchtigen Speichermedium, wobei das Computerprogrammprodukt dazu konfiguriert ist, bei Ausführung auf einem Computer die Verfahrensschritte nach einem der Ansprüche 11 bis 15 auszuführen.

## Revendications

1. Système de commande d'un véhicule (1) sur une route en pente descendante, le véhicule comprenant un moteur à combustion prévu avec un frein moteur (100) et comprenant en outre un organe de commande de frein (200) programmé pour :
- après activation, par un conducteur, du frein moteur, activer, grâce à l'organe de commande de frein, un frein de base (400) lors d'une période transitoire selon un profil de frein de base (40) ;
dans lequel :
∘ le profil de frein de base a une première phase initiale avec une puissance de freinage maximale qui abaisse la vitesse du véhicule sur la route en pente descendante, et dans lequel :
∘ le profil de frein de base a une deuxième phase avec une puissance de freinage inférieure à la puissance de freinage maximale et qui diminue progressivement avec une constante de temps à peu près égale à l'augmentation de la performance du frein moteur due à l'accumulation de la contre-pression, à un état stable, dans lequel la vitesse de véhicule est sensiblement constante avec une puissance de frein de base nulle.

2. Système selon la revendication 1, dans lequel le profil de frein de base dépend d'un mode de puissance sélectionné du frein moteur (100).

3. Système selon l'une quelconque des revendications précédentes, dans lequel la première phase initiale chevauche sur une phase initiale du frein moteur (100).

4. Système selon l'une quelconque des revendications précédentes, dans lequel la première et/ou la deuxième phase dépend (dépendent) d'un mode de puissance de frein moteur sélectionné.

5. Système selon l'une quelconque des revendications précédentes, dans lequel la puissance de freinage maximale dépasse, pour au moins un mode de puissance de frein moteur sélectionné, 350 kW, de préférence 480 kW.

6. Système selon l'une quelconque des revendications précédentes, dans lequel l'organe de commande de frein (200) enregistre l'accélération du véhicule et commande un profil de frein de base calculé en tant que point de consigne de frein de base qui est activé à une valeur non nulle et qui est réglé dans une boucle de rétroaction selon l'accélération du véhicule enregistrée.

7. Système selon la revendication 6, dans lequel le point de consigne est réglé sur une valeur nulle dans une condition de surcharge thermique du frein de base (400).

8. Système selon l'une quelconque des revendications précédentes, dans lequel la puissance de freinage maximale est réglée selon un réglage de pente, de masse du véhicule et de puissance de frein moteur.

9. Système selon l'une quelconque des revendications précédentes, qui fait partie d'un système de régulateur de vitesse.

10. Véhicule comprenant un système selon l'une quelconque des revendications précédentes.

11. Procédé de commande d'un véhicule sur une route en pente descendante, le véhicule comprenant un moteur à combustion prévu avec un frein moteur, comprenant :
- après activation, par un conducteur, du frein moteur, activer automatiquement le frein de base lors d'une période transitoire ayant un profil de frein de base ; dans lequel :
∘ le profil de frein de base a une première phase initiale avec une puissance de freinage maximale qui abaisse la vitesse du véhicule sur la route en pente descendante, et dans lequel :
∘ le profil de frein de base a une deuxième phase avec une puissance de freinage inférieure à la puissance de freinage maximale et qui diminue progressivement avec une constante de temps à peu près égale à l'augmentation de la performance du frein moteur due à l'accumulation de la contre-pression, à un état stable, dans lequel la vitesse de véhicule est sensiblement constante avec une puissance de frein de base nulle.

12. Procédé selon la revendication 11, dans lequel le profil de frein de base dépend d'un mode de puissance sélectionné du frein moteur.

13. Procédé selon l'une quelconque des revendications 11 à 12, dans lequel la première phase initiale chevauche sur une phase initiale du frein moteur.

14. Procédé selon l'une quelconque des revendications 11 à 13, dans lequel un profil de frein de base calculé est utilisé en tant que point de consigne de frein de base qui est activé à une valeur non nulle et qui est réglé dans une boucle de rétroaction selon l'accélération de véhicule enregistrée.

15. Procédé selon l'une quelconque des revendications 11 à 14, dans lequel la puissance de freinage maximale est réglée selon une pente.

16. Produit de programme informatique mis en œuvre sur un support de stockage non transitoire lisible par ordinateur, le produit de programme informatique étant configuré pour, lorsqu'il fonctionne sur un ordinateur, exécuter les étapes de procédé selon l'une quelconque des revendications 11 à 15.
